# EUROPEAN PATENT SPECIFICATION

(11) **EP 0 601 586 B1**
(45) Date of publication and mention of the grant of the patent: **11.07.2001**
(21) Application number: 93119895.6
(22) Date of filing: 09.12.1993
(51) Int. Cl.: C08F 6/24, C08F 14/06

(54) **Method of producing vinyl chloride type polymer**
Verfahren zur Herstellung eines Polymeren vom Vinylchloridtyp
Procédé pour la préparation d'un polymère du type chlorure de vinyle

(30) Priority: 10.12.1992 JP 33044292; 10.12.1992 JP 33044392
(43) Date of publication of application: 15.06.1994
(73) Proprietor: TOSOH CORPORATION, Yamaguchi-ken 746 (JP)
(72) Inventor: Tanaka, Toshihiko, Yokkaichi-shi, Mie-ken (JP); Minamide, Hiroshi, Yokkaichi-shi, Mie-ken (JP)
(74) Representative: VOSSIUS & PARTNER

(56) References cited:
- DD-A- 200 025
- DE-A- 2 625 167
- DE-A- 3 135 198
- GB-A- 867 176
- US-A- 2 993 022
- US-A- 4 604 419

## Description

The present invention relates to a method of producing a vinyl chloride type polymer by suspension polymerization. In particular, it relates to a production method of vinyl chloride type polymer having excellent fluidity.

Vinyl chloride type polymers are usually produced by suspension polymerization see eg US-A-4 604 419, US-A-2 993 022, DD-A-2 000 252, DE-A-2 625 167 and, after refinement such as separation from slurry and drying, it is conveyed by pneumatic transportation for storage or bag-filling.

However, the vinyl chloride type polymer thus obtained carries static electricity due to friction by itself and with other materials in the process of conveyance and bag-filling. Said electric charge reduces the fluidity and decreases the bulk specific gravity over that of vinyl chloride type polymer just after production. Hence, it becomes remarkably difficult in handling, posing a problem of serious obstacles in operation. As the methods of alleviating the adverse effect due to such build-up of electric charge of the polymer, a method to add, e.g. a nonionic surfactant or a cationic surfactant being an antistatic agent to the vinyl chloride type polymer and a method to adjust the humidity by blowing steam into the vinyl chloride type polymer have been employed so far.

Said method to add a surfactant, however, has the drawback that it cannot satisfactorily prevent the decrease in bulk specific gravity of the polymer and, in addition, it adversely affects the thermal stability and the initial coloring property of the product. Moreover, the method to blow steam into the product has the drawback of increased labor requirement and complicated equipment.

Thus, the object of the invention is to provide a method of producing a vinyl chloride type polymer with decreased bulk specific gravity due to build-up of electric charge and yet with good quality.

For achieving said object, the invention provides a method of producing a vinyl chloride type polymer comprising the step that, upon producing a vinyl chloride type polymer by suspension polymerization of vinyl chloride monomer or a mixture of vinyl type monomers having vinyl chloride as a major component in an aqueous medium, glycerine, pentaerythritol and/or their polycondensates are added to the slurry containing the vinyl chloride type polymer as an aqueous solution having a concentration of 5 to 90 % in an amount of 0.001 to 0.5 parts by weight to 100 parts by weight of said vinyl chloride type polymer.

In the method of the invention, the vinyl chloride type polymer is synthesized by suspension polymerization. As the vinyl chloride type polymers, homopolymer of vinyl chloride and copolymers of vinyl chloride with other copolymerizable vinyl type monomers can be mentioned. As the vinyl type monomers copolymerizable with vinyl chloride, for example, alkyl vinyl esters such as vinyl acetate, alkyl vinyl ethers such as cetyl vinyl ether, α-monoolefinic monomers such as ethylene and propylene, acrylic alkyl esters such as methyl acrylate and methacrylic alkyl esters such as methyl methacrylate are mentioned.

The suspension polymerization of the vinyl chloride type polymer is well known and the vinyl chloride monomer or vinyl chloride monomer and other polymerizable vinyl monomers are polymerized in an aqueous medium in the presence of a suspending agent and a polymerization initiator. In this way, a slurry containing the vinyl chloride type polymer can be obtained.

Next, according to the method of the invention, a polyhydric alcohol is added to the slurry containing the vinyl chloride type polymer as an aqueous solution with a concentration of 5 to 90 %. As the polyhydric alcohol glycerine, pentaerythritol and for their polycondensates and water-soluble polyhydric alcohols having these as major components are used. The addition level of said polyhydric alcohol is preferably 0.001 to 0.5 parts by weight to 100 parts by weight of vinyl chloride type polymer. If the addition level is under 0.001 parts by weight, the extreme decrease in bulk specific gravity due to electrical charge cannot be prevented. Even if the addition level may exceed 0.5 parts by weight, the effect of addition is not enhanced beyond, which is uneconomical.

In the following, the invention will be illustrated concretely based on the examples, but the invention is not confined thereto.

### Example 1

Into a stainless steel polymerization reactor were charged 100 parts by weight of vinyl chloride monomer, 150 parts by weight of deionized water, 0.1 part by weight of partially saponified poly(vinyl alcohol) and 0.04 parts by weight of 2-ethylhexyl peroxydicarbonate, and the polymerization was conducted at a temperature of 57 °C. When the pressure inside the polymerization reactor reached 6.0 kg/cm G, the unreacted vinyl chloride monomer was recovered to obtain a slurry of vinyl chloride polymer. Tetraglycerine was added to the polymer slurry thus obtained as 30 % aqueous solution in an amount of 0.1 part by weight based on the polymer. Thereafter, the polymer was separated from said slurry and submitted to fluidized drying for 2 hours at 70 °C to obtain a vinyl chloride polymer.

### Example 2

Similarly to Example 1, vinyl chloride polymers were obtained, except that the type of polyhydric alcohol, addition level and concentration of aqueous solution in Example 1 were varied as the conditions shown in table 1.

### Comparative example 1

Similarly to Example 1, vinyl chloride polymer was obtained, except that tetraglycerine was not added.

### Comparative example 2

Similarly to Example 1, vinyl chloride polymer was obtained, except that a 50 % aqueous solution of polyoxyethylene sorbitan monolaurate was used in place of tetraglycerine in Example 1.

With the vinyl chloride polymers obtained in Examples 1 and 2 and Comparative examples 1 and 2, measurement of bulk specific gravity and test of thermal stability were performed. The results are shown in Tables 1 and 2.

### 1. Bulk specific gravity

After the vinyl chloride polymer was allowed to stand for 48 hours in a thermohygrostatic room of a temperature of 23 °C and a relative humidity of 50 %, the bulk specific gravity was measured according to the method of JIS K-6721.

Moreover, after the vinyl chloride polymer allowed to stand for 48 hours under the same conditions as above was stirred for 2 minutes at 60 rpm with a Brabender planetary mixer, the bulk specific gravity was compared by the same method as above.

### 2. Thermal stability

To 100 parts by weight of vinyl chloride polymer,

| | |
|---|---|
| tribasic lead sulfate | 1.0 part by weight |
| | |
| lead stearate | 1.5 part by weight |
| | |
| calcium stearate | 0.5 part by weight |

were added and, after kneading for 5 minutes on rolls of 190 °C, 1 mm thick sheets were fabricated. These sheets were placed in an oven of 190 °C and the time until blackening was measured.

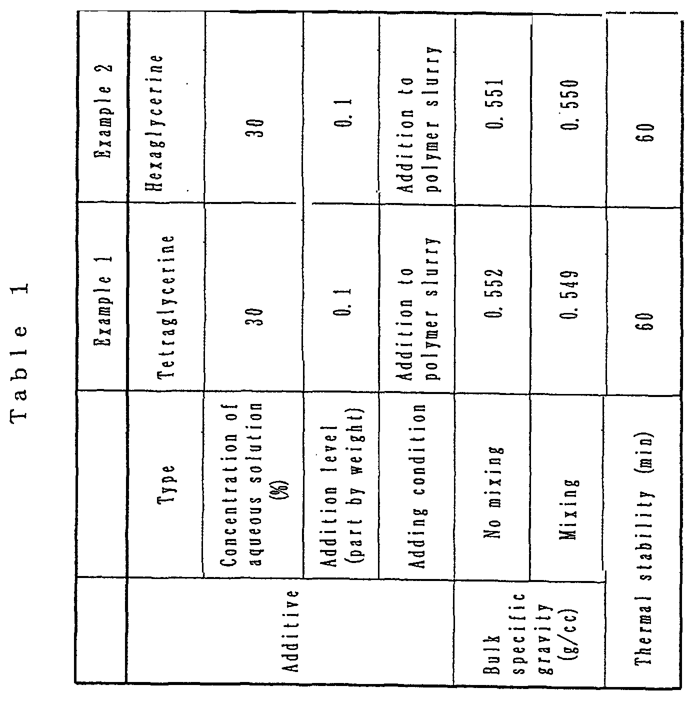

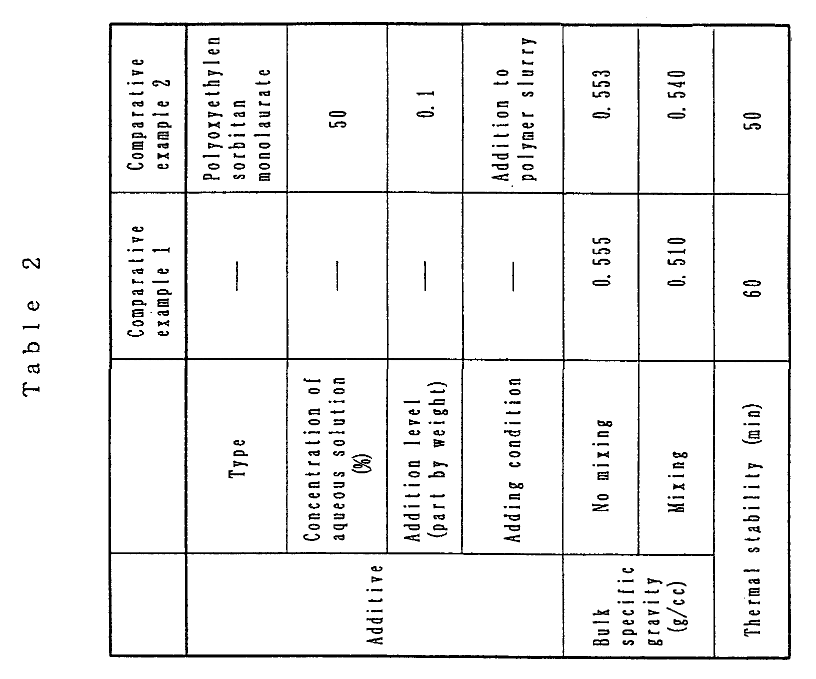

## Claims

1. A method of producing a vinyl chloride type polymer consisting of the step that, upon producing a vinyl chloride type polymer by suspension polymerization of vinyl chloride monomer or a mixture of vinyl type monomers having vinyl chloride as a major component in an aqueous medium, glycerine, pentaerythritol and/or their polycondensates are added to the slurry containing the vinyl chloride type polymer as an aqueous solution having a concentration of 5 to 90 % in an amount of 0.001 to 0.5 parts by weight to 100 parts by weight of said vinyl chloride type polymer.

2. The method of producing a vinyl chloride type polymer defined in claim 1, wherein the vinyl chloride type polymer is a homopolymer of vinyl chloride or a copolymer of vinyl chloride with other copolymerizable vinyl type monomer(s).

## Patentansprüche

1. Verfahren zur Herstellung eines Polymers vom Vinylchloridtyp, bestehend aus dem Schritt, daß bei der Herstellung eines Polymers vom Vinylchloridtyp durch Suspensionspolymerisation von Vinylchloridmonomer oder eines Gemisches von Monomeren vom Vinyltyp mit Vinylchlorid als einem Hauptbestandteil in einem wässrigen Medium Glycerin, Pentaerythrit und/oder ihre Polykondensate zu der Aufschlämmung, die das Polymer vom Vinylchloridtyp als wässrige Lösung mit einer Konzentration von 5 bis 90 % enthält, in einer Menge von 0,001 bis 0,5 Gew.-Teile zu 100 Gew.-Teilen des Polymers vom Vinylchloridtyp zugegeben werden.

2. Verfahren zur Herstellung eines Polymers vom Vinylchloridtyp gemäß Anspruch 1, wobei das Polymer vom Vinylchloridtyp ein Homopolymer von Vinylchlorid oder ein Copolymer von Vinylchlorid mit (einem) anderen copolymerisierbaren Monomer(en) ist.

## Revendications

1. Procédé de production d'un polymère de type chlorure de vinyle constitué de l'étape consistant à, lors de la production d'un polymère de type chlorure de vinyle par polymérisation en suspension d'un monomère de chlorure de vinyle ou d'un mélange de monomères vinyliques dont le chlorure de vinyle est le composant principal dans un milieu aqueux, on ajoute de la glycérine, du pentaérythritol et/ou leurs polycondensats à la boue contenant le polymère de type chlorure de vinyle, sous la forme d'une solution aqueuse présentant une concentration de 5 à 90 %, en quantité de 0,001 à 0,5 partie en poids pour 100 parties en poids dudit polymère de type chlorure de vinyle.

2. Procédé de production d'un polymère de type chlorure de vinyle selon la revendication 1, dans lequel le polymère de type chlorure de vinyle est un homopolymère de chlorure de vinyle ou un copolymère de chlorure de vinyle avec un ou plusieurs autres monomères vinyliques copolymérisables.
